# EUROPÄISCHE PATENTSCHRIFT

(11) **EP 3 265 186 B1**
(45) Veröffentlichungstag und Bekanntmachung des Hinweises auf die Patenterteilung: **07.09.2022**
(21) Anmeldenummer: 16707815.3
(22) Anmeldetag: 04.03.2016
(51) Int. Cl.: A63B 71/06, G02C 11/00, A63B 24/00, A63B 69/36, G02C 7/10, G09B 19/00

(54) **TRAININGSGERÄTEANORDNUNG ZUM VERBESSERN DER BALLBEHERRSCHUNG**
TRAINING SET TO IMPROVE BALL CONTROL
AGENCEMENT D'ENTRAINEMENT POUR AMELIORER LE CONTROLE DE LA BALLE

(30) Priorität: 04.03.2015 DE 102015002677
(43) Veröffentlichungstag der Anmeldung: 10.01.2018
(73) Patentinhaber: SENSUSPORT UG, 85757 Karlsfeld (DE)
(72) Erfinder: BÜHRING, Nils, 81669 München (DE); WUNNER, Felix, 85356 Freising (DE); GROSSMANN, Luise, 85356 Freising (DE)
(74) Vertreter: Fish & Richardson P.C.
(86) Internationale Anmeldenummer: PCT/EP2016/054667
(87) Internationale Veröffentlichungsnummer: WO 2016/139349

(56) Entgegenhaltungen:
- WO-A1-95/17227
- DE-U-202008 013 782
- US-A- 4 848 890
- US-A1- 2008 151 175
- US-A1- 2013 009 059

## Beschreibung

Die Erfindung betrifft eine Trainingsgeräteanordnung, wahlweise für Anwendungen im Sport, vorzugsweise Ballspiele, die unter Verwendung eines Schlägers ausgeübt werden, wie Golf, Tennis, Baseball sowie ein geeignetes Verfahren hierfür. Im Einzelnen bezieht sich die Erfindung beispielsweise auf eine Anordnung zum Verbessern der Ballbeherrschung.

Der situationsgerechte Ablauf einer Wurf-, Stoss-, Schlag- und/oder Schussbewegung, die darauf abzielt, einem Ball mittels eines Schlägers oder unmittelbar durch den Fuß oder die Hand insbesondere eine bestimmte Flugbahn und Anfangsgeschwindigkeit zu erteilen,
- oder der situationsgerechte Ablauf einer Bewegung des Körpers, die zu einen bestimmten Zeitpunkt eingeleitet wird und darauf aufbauend die weitere Bewegung bestimmt und beeinflusst
- oder die situationsgerechte relative Veränderung der Position eines Sportgeräts durch körperliche Leistung
ist nur durch ständiges Training erreichbar bzw. verbesserbar.

Der Sportler steuert den komplexen Bewegungsablauf weitgehend unbewusst ("automatisch") und korrigiert oder verbessert ihn allmählich in einem Lernprozess, der teils auf der visuell festgestellten Abweichung des tatsächlichen von dem gewünschten Ballverhalten oder der Körperbewegung, teils auf dem gefühlten Bewegungsablauf, insbesondere einer taktilen Rückmeldung, beruht, die der Sportler erhält, wenn
- die Schlagfläche des Schlägers auf den Ball trifft oder der Ball die Hand oder den Fuß des Sportlers verlässt,
- der Körper durch eine kontrollierte Bewegung, insbesondere durch einen Absprung den Kontakt zum Boden oder aus einer definierten Position oder den Kontakt zu anderen Sportgeräte verliert,
- ein Sportgerät durch eine körperliche Bewegung aus einer ruhenden oder sich bewegenden, bzw. beschleunigten Position gebracht wird.

Die ebenfalls nahezu automatisch erfolgende, visuelle Verfolgung des Balles beansprucht einen Teil der Aufmerksamkeit des Sportlers zu Lasten seiner gefühlten Wahrnehmungen. Deshalb fordern Trainer häufig ihre Sportler auf, zur Verbesserung der Ballbeherrschung ihre Augen nach dem Einleiten der Schlag- oder Wurfbewegung zu schließen.

Ein analoges Phänomen ist bei Sportarten bekannt, bei denen vor und nach dem Absprung oder dem Beginn eines gewünschten Bewegungsablaufs oder der Einleitung der Veränderung der Position eines Sportgeräts, eine definierte Bewegung erfolgen muss. Hierbei kann auch nach dem Absprung durch Schliessen der Augen erhöhter Trainingserfolg festgestellt werden.

Dieses (wiederholte) Schließen und Öffnen der Augen beansprucht als bewusst auszuführende Handlung jedoch ebenfalls einen Teil der Aufmerksamkeit. Aus der CH 688 981 A5 ist eine im unteren Gesichtsfeld eingeschränkt transparente Brille bekannt, mit der im Rahmen von Mannschaftssportarten erreicht werden soll, dass der Träger seine visuelle Aufmerksamkeit statt auf den Ball auf den Gegner und seine Mitspieler konzentriert.

Aus der US 2 045 399 A ist eine für Golfspieler bestimmte Brille mit Farbgläsern bekannt, die nur im Bereich eines kleinen Fensters vollständig transparent sind. Das Fenster ist so in den Gläsern positioniert, dass der Golfspieler den Ball während des Abschlages nur bei korrekter Kopfhaltung sehen kann.

Aus der DE 20 2008 013 782 U1 ist es bekannt eine unrichtige Kopfhaltung z.B. eines Fußballspielers mittels einer Shutterbrille in Kombination mit einem Neigungssensor zur korrigieren. Die Shutterbrille schränkt das Gesichtsfeld ein, wenn der Spieler "nach unten" d.h. auf den Ball sieht.

Aus der US 2011/0310318 A1 ist eine Shutterbrille bekannt, deren beide LCD-Gläser gleichzeitig und mit einstellbarer Frequenz sowie einstellbarem Puls- /Pause-Verhältnis zwischen einem transparenten und einem halbtransparenten Zustand schaltbar sind. Diese Shutterbrille dient zur Simulierung eines Zeitlupeneffektes bei der visuellen Verfolgung z.B. der Flugbahn eines Balles.

Aus der DE 20 2011 109 702 U1 ist eine LCD-Shutterbrille für das Training von Mannschaftssportarten bekannt. Eine Aufgabe oder ein Vorteil sind nicht genannt. Eine konkrete technische Lehre ist der Schrift nicht zu entnehmen.

Aus der DE 41 39 275 C1 ist eine Anordnung aus einer Videokamera und einem brillenartig vor den Augen z.B. eines Golfspielers befindlichen Monitor bekannt. Die Videokamera sendet das Bewegtbild an diesen Monitor, sodass der Spieler seinen eigenen Bewegungsablauf in Echtzeit sieht. Er wird also gerade nicht auf das Fühlen sondern auf das Sehen konditioniert.

US 2008/151175 A1 beschreibt eine Vorrichtung, die einen Rahmen umfasst, der so konfiguriert ist, dass er auf einem Gesicht getragen werden kann, so dass sich ein Teil des Rahmens vor einem ersten Auge und nicht vor einem zweiten Auge befindet. Die Vorrichtung umfasst auch eine erste Linse, die eine oder mehrere erste Linsen umfasst, die mit dem Abschnitt des Rahmens gekoppelt sind, und ein zweites Linsensystem, das eine oder mehrere zweite Linsen umfasst, die mit dem Abschnitt gekoppelt sind. Ein Transparenzregelelement, das mit dem ersten Linsensystem gekoppelt ist, weist eine variable Transparenz auf und ist konfiguriert, um das Betrachten durch das zweite Linsensystem zu verbessern.

US 2013/009059 A1 beschreibt eine Vorrichtung mit mindestens einem Filter, insbesondere für einen lindernden und vorbeugenden Augenschutz, wie Brille, Sonnenbrille oder Scheibe, wobei die Vorrichtung mindestens einen Filter zur Beeinflussung und Filterung von UV-, Blaulicht-und Infrarotstrahlung aufweist, wobei der mindestens eine Filter sich durch bestimmte Grenzwerte auszeichnet, die in ihrer Kombination definiert sind.

Der Erfindung liegt die Aufgabe zugrunde, eine Anordnung bereitzustellen, die mit technischen Mitteln erreicht, dass sich die Aufmerksamkeit des Sportlers im Verlauf einer Wurf-, Stoss-, Schlag- und/oder Schussbewegung, und/oder dem Beginn eines definierten Bewegungsablaufes von Körper oder verwendetem Sportgerät in verstärktem Maß auf das Fühlen konzentriert und sich dadurch der Lern- oder Trainingserfolg verbessert.

Diese Aufgabe löst die Anordnung nach der Erfindung durch einen Detektor, der einen Sender umfasst und zu einem wählbaren Zeitpunkt zwischen dem Beginn einer Bewegung zum Werfen, Stossen, Schlagen oder Schießen oder des Körper und/oder des Sportgerätes und der Flugphase des Sportgerätes oder des Körpers das Senden eines Signals auslöst und durch eine Shutterbrille mit einer ihre Transparenz steuernden Empfangsschaltung, die beim Empfang des Signals des Senders ein Umschalten von hoher Transparenz auf niedrige Transparenz steuert.

Auf die detaillierte Beschreibung der Shutterbrille in der oben genannten US 2011/0310318 A1 wird nur vorsorglich Bezug genommen, denn die Hardware und die Software sind Stand der Technik. Das gleiche gilt für den steuernden Sender, der mit der Empfangsschaltung drahtlos und vorzugsweise unter Verwendung einer standardisierten Übertragungstechnologie kommuniziert.

Der Begriff "Shutterbrille" wird vorliegend nicht im Sinne einer Beschränkung auf LCD-Shutterbrillen verwendet sondern steht stellvertretend für Brillengestelle, deren "Gläser" mittels elektrischer Signale zwischen hoher Transparenz und niedriger Transparenz, d.h. hoher Opazität, schaltbar sind.

Der Zeitpunkt, zu dem der Sender das Signal an die Empfangsschaltung der Shutterbrille sendet und damit das Umschalten der Shutterbrille von hoher Transparenz auf niedrige Transparenz bewirkt, kann in einem Zeitintervall zwischen dem Beginn einer Bewegung und dem mit dem Abschlag oder Abwurf beginnenden Freiflug des Balles oder des eigenen Körpers oder des Sportgeräts eingestellt werden. Die Wahl des Zeitpunktes hängt auch von der Art der Detektion der Bewegung ab. Im einfachsten Fall kann ein Trainer zu Beginn oder im Verlauf der Bewegung das Senden des Signals über einen Taster auslösen. Abhängig von der Art der Erkennung Bewegung, alternativ der Erkennung der Änderung des Bewegungszustandes des Sportgerätes und/oder Körpers, kann es zweckmäßig sein, den Sender mit einer Verzögerungsschaltung mit fester oder einstellbarer Verzögerungszeit für das Senden des Signals nach Bewegungserkennung und/oder die Empfangsschaltung mit einer Verzögerungsschaltung für das Auslösen des Umschaltens von hoher Transparenz auf niedrige Transparenz auszustatten.

Die Erfindung kann jedoch auch bei weiteren Sportarten angewandt werden, bei denen zu einem definierten Zeitpunkt eine Veränderung der eigenen Körperposition, bzw. eines Sportgerätes aus einer definierten Lage erfolgt.

Im Einzelnen bezieht die Erfindung sich auf eine Anordnung zum Verbessern der Bewegungs- und/oder Sportgerätbeherrschung zum Werfen, Stoßen, Schlagen und/oder Schießen. Der Begriff "niedrige Transparenz" ist so zu verstehen, dass der Sportler in diesem Zustand der Shutterbrille die Umgebung und insbesondere die Flugbahn des Sportgerätes oder seine eigene Köperbewegung nur noch schemenhaft sehen kann oder sein Gesichtsfeld vollständig abgedunkelt ist.

Die Empfangsschaltung kann mindestens das Umschalten von der hohen auf die niedrige Transparenz statt abrupt auch gleitend steuern um eine Ablenkung des Sportlers von der Kin-ästhetik und taktilen Rückmeldung durch einen abrupten Hell/Dunkel-Wechsel zu vermeiden. Auch den umgekehrten Wechsel von Dunkel nach Hell kann die Empfangsschaltung gleitend steuern und damit einen Blendungseffekt verringern bzw. vermeiden.

Die Empfangsschaltung der Shutterbrille wird nach dem Umschalten von der hohen auf die niedrige Transparenz mit einer einstellbaren Verzögerung auf die hohe Transparenz zurückgeschaltet.

Im Moment des Zurückschaltens von der niedrigen auf die hohe Transparenz sind die Pupillen des Sportlers noch weit gestellt und deshalb besonders empfindlich gegen UV-Strahlung. Vorzugsweise umfassen deshalb die Sichtfenster ("Gläser") der Shutterbrille UV-Filter, z.B. in Form einer UV-absorbierenden und/oder reflektierenden Beschichtung.

Die Shutterbrille kann zusätzlich einen Rückkanalsender und der Sender kann ein Empfangsmodul umfassen, damit der Rückkanalsender den Transparenzzustand der Shutterbrille an den Sender übermitteln kann. In Abhängigkeit von dem Transparenzzustand der Shutterbrille kann auf diese Weise der Sender für eine gegebene oder einstellbare Zeit in einen Sperrzustand versetzt werden. Dadurch wird weitgehend verhindert, dass Störeinflüsse aus der Umgebung, z.B. ein in der Nähe befindlicher weiterer Sportler, ein Umschalten der Shutterbrille auslösen.

Der Detektor der Anordnung nach der Erfindung kann ein Bewegungsdetektor sein, der auf eine voreingestellte oder vorwählbare Phase der Bewegung des Sportlers oder seines Sportgerätes anspricht.

Dieser Bewegungsdetektor kann eine Kamera sein, die den zeitlichen Ablauf der Bewegung bis zu einem ersten Teil der Flugphase des Körpers oder des Sportgerätes durch digitale Bildverarbeitung mit einem gespeicherten Ablauf vergleicht und bei Eintritt einer voreingestellten Übereinstimmung das Senden des Signals auslöst.

Alternativ kann der Bewegungsdetektor ein passiver optischer Detektor sein, der vorzugsweise ein an die jeweiligen Sportarten angepasstes, eingeengtes Gesichtsfeld hat und auf die Änderung der empfangenen Intensität sichtbarer oder infraroter (Licht-) Strahlung im Zusammenhang mit der Bewegung und/oder der Bewegung des Sportgerätes anspricht. Wiederum abhängig von der Sportart können z.B. an einem Handschuh, am Schuh, am Schläger und/oder an dem Ball Materialien (wie etwa Klebefolien) oder Farbe mit besonders hohem Reflexionsgrad angebracht sein, um die Zuverlässigkeit der Detektion zu erhöhen.

In einer weiteren Ausführungsform kann der Bewegungsdetektor ein aktiver Detektor nach dem Lichtschrankenprinzip, insbesondere in Form einer Reflexlichtschranke, sein. Unabhängig von der Art der verwendeten Strahlung ist die Erkennungs-sicherheit höher als bei einem passiven optischen Detektor. Zur Verringerung des elektrischen Leistungsverbrauches empfiehlt sich ein gepulster Betrieb. Auch beim Einsatz eines aktiven Detektors kann die oben genannte Verwendung reflektierender Stoffe zweckmäßig sein.

In einer weiteren Ausführungsform kann der Bewegungsdetektor ein aktiver Detektor nach dem Radarprinzip, insbesondere ein Dopplerradargerät, sein. Doppler-radargeräte zur Verfolgung der Flugbahn eines Balles, des Körpers oder eines Sportgerätes sind Stand der Technik.

In einer weiteren Ausführungsform kann der Bewegungsdetektor ein Beschleunigungsdetektor sein. Insbesondere kann der Beschleunigungsdetektor Veränderungen von Geschwindigkeiten und Richtungen erfassen. Wahlweise können hierfür Piezoelemente eingesetzt werden. Hierbei können beispielsweise genannte Beschleunigungssensoren an einem Handschuh angebracht werden, die rapides Abklappen der Hand, beispielsweise beim Wurf von einem Handball aufnehmen. Diese und das Erfassen der Veränderung von Geschwindigkeiten und Richtungen von Körpern oder Sportgeräten sind Stand der Technik.

In einer besonders einfachen und daher kostengünstigen, für viele Sportarten geeigneten Ausführungsform ist der Detektor ein akustischer Detektor, der auf den Schallimpuls beispielsweise beim Auftreffen der Schlagfläche eines Schlägers, des Fußes oder der Hand des Sportlers auf den Ball anspricht und das Senden des Signals an die Shutterbrille auslöst. Ferner kann ein solcher akustischer Sensor auch neben den Absprungsort bei Leichtathletik positioniert werden. Zur Verbesserung der Detektionssicherheit kann der akustische Detektor ein Richtmikrofon umfassen. Alternativ oder zusätzlich kann der Detektor eine Filterschaltung umfassen, die auf das z.B. für den Abschlag eines Golfballes charakteristische, knallartige Geräusch abgestimmt ist. Die Filterschaltung kann eine digitale Schaltung sein, die empfangene Schallsignale elektronisch verarbeitet, mit einem gespeicherten Muster vergleicht und bei hinreichender Übereinstimmung die Übermittlung des Signals durch den Sender auslöst. Der Aufstellungsort des akustischen Detektors relativ zur Position des Sportlers ist unkritischer als bei Einsatz eines optischen oder eines Radardetektors.

In einer weiteren Ausführung kann der Detektor auch einen Vibrationsdetektor darstellen, welcher zum Zeitpunkt des Auftreffens eines Objekts, beispielsweise eines Balles auf ein Sportgerät, beispielsweise einen Schläger, durch den entstehenden mechanischen Impuls das Senden des Signals auslösen. Der Vibrationssensor kann mit dem Signalsender direkt am Sportgerät installiert werden. Diese Art findet insbesondere bei Schlagsportarten breite Anwendung, bei denen ein rapides Schlagen stattfindet und der Schläger pro Versuch unterschiedliche Wege durchläuft. Beispielsweise gleicht die Bewegungsbahn des Schlägers beim Baseball selten derjenigen zuvor, was das Erfassen des Zeitpunkts des Auftreffens des Balles mit oben genannten Detektormöglichkeiten erschweren würde.

In einer weiteren Ausführung kann der Detektor auch ein Drucksensor sein, der Veränderungen von auf Objekte wirkende Kräfte erfasst. Diese Art von Detektor reagiert sowohl bei Druckaufbau, als auch bei Druckabfall um das Senden des Signals einzuleiten. Diese Art der Erfassung kommt beispielsweise bei Sportarten zum Einsatz, bei denen das Sportgerät angehoben wird, beispielsweise beim Gewichtheben. Im Moment des Abhebens des Sportgeräts durch den Benutzer vom Boden verändert sich der Druck des zwischen Boden und Sportgerät angebrachten Detektors und sendet das Signal zur Verdunklung an die Shutterbrille. Eine weitere Anwendung ist bei Wurf-, und/oder Stoß Sportarten möglich, wenn beispielsweise ein Speerwerfer den Speer aus der Hand gleiten lässt und der am Handschuh angebrachte Drucksensor das Signal sendet. Gleiches ist bei Sportarten, wie Kugelstossen oder Bowling denkbar.

In einer weiteren Anwendung kann der Detektor einen resitiven oder mechanischen Verformungssensor darstellen, der dehnende oder stauchende Verformungen erfasst. Entsprechende Sensoren werden an Körperteilen oder Sportgeräten angebracht und Verformungen lösen die Veränderung von elektrischen Widerständen aus. Diese Anwendung kann an beispielsweise Handschuhen beim Basketball angebracht werden, und das Signal bei einer vordefinierten Längenänderung durch Abklappen der Hand beim Wurf auslösen. Ferner kann ein Dehnungssensor am Ort des Absprungs beim Weitsprung angebracht werden, der das Signal auslöst, wenn dieser Ort mit dem Fuß berührt wird. Diese und das Erfassen der Verformungen von Körpern ist Stand der Technik.

Die Detektion des auslösenden Signals kann wahlweise auch über die in einem Mobilgerät, beispielsweise einem Smartphone, integrierte Aufnahmetechnik durchgeführt werden und folglich über ebenfalls integrietre signalsendende Elemente übertragen werden.

Der Aufbau und die Arbeitsweise sowie die Anpassung solcher Detektoren an die Gegebenheiten im Rahmen der Erfindung sind dem Fachmann teils bekannt, teils liegen sie im Bereich fachmännischen Handelns.

In der Zeichnung ist ein für das Training eines Golfspielers geeignetes Ausführungsbeispiel der Erfindung schematisch vereinfacht dargestellt. Es zeigt:
- Figuren 1 bis 3:: Die Anordnung nach der Erfindung und deren Funktion in drei Phasen des Abschlages eines Golfballes und
- Figur 4:: Blockschaltbilder der Anordnung.

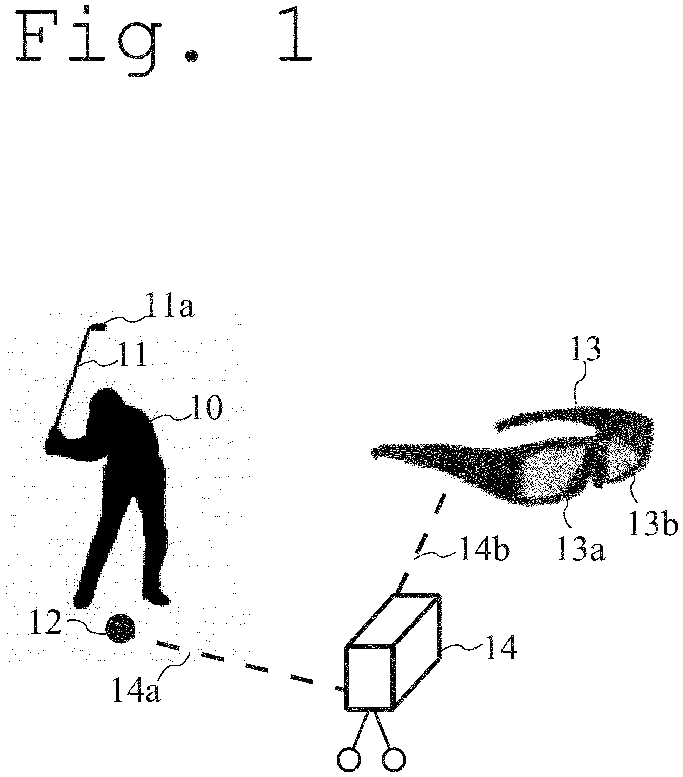

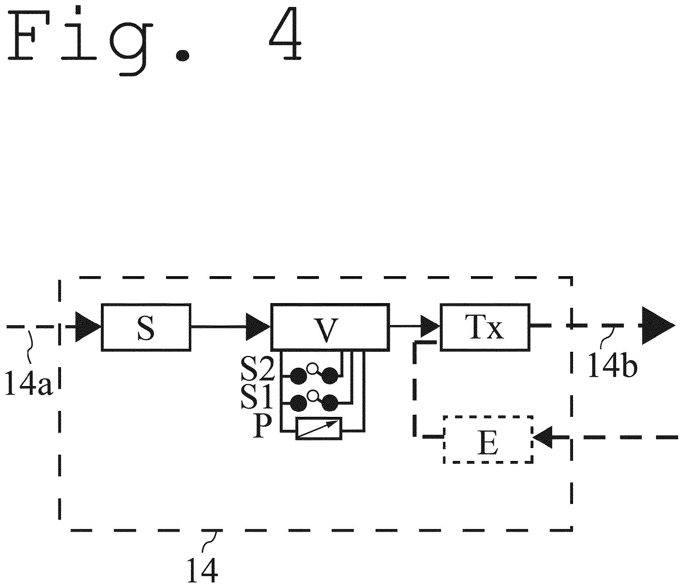

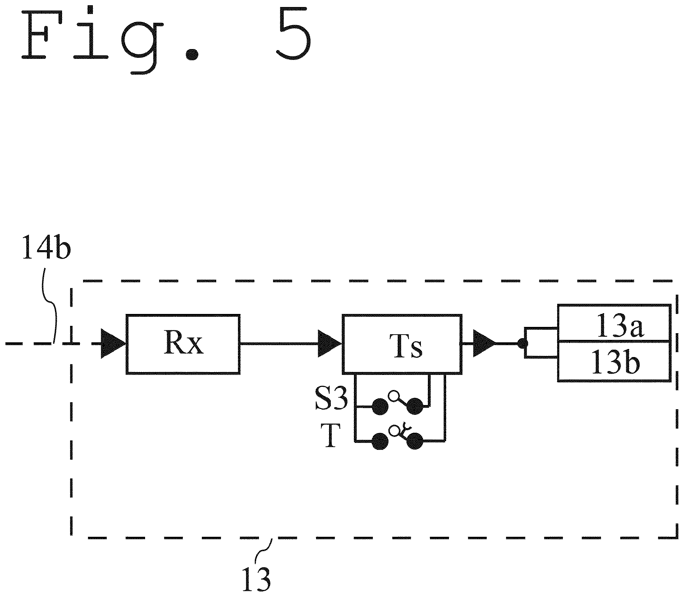

Der Golfspieler 10 in Figur 1 befindet sich in der ersten Phase einer mittels eines Golfschlägers 11 mit Schlagkopf 11a ausgeführten Schlagbewegung, die auf einen Golfball 12 (zur Verdeutlichung vergrößert) gerichtet ist. Der Spieler 10 trägt eine vergrößert dargestellte LCD-Shutterbrille 13, deren Gläser 13a und 13b vorzugsweise mit einer UV-Schutzschicht versehen sind. Die Shutterbrille 13 umfasst in den Brillenbügeln die an sich bekannten und deshalb nicht dargestellten Komponenten zur Steuerung der Transparenz der Gläser 13a und 13b (vgl. auch Figur 4). Die Gläser sind in dieser Phase der Bewegung im Zustand hoher Transparenz. In einiger Entfernung, z.B. seitlich von dem Golfball 12, ist ein ortsbeweglicher Detektor 14 angeordnet, der, wie durch die gestrichelte Linie 14a angedeutet, auf den Golfball 12 ausgerichtet ist. Der Detektor steht zweckmäßig auf einem Stativ. Der Detektor 14 umfasst einen Sender (vgl. Figur 4), der, wie durch die gestrichelte Linie 14b angedeutet, an die Shutterbrille 13 ein Signal senden kann. Der Detektor 14 ist, hier beispielsweise, ein akustischer Detektor mit einem Richtmikrofon (nicht dargestellt). Der Detektor 14 könnte, wie in der Beschreibungseinleitung angegeben, z.B. auch ein optischer Detektor sein, der entweder auf den Golfball 12 ausgerichtet ist oder auf eine bestimmte Position des Schlägerkopfes 11a, alternativ auf einen Schuh des Spielers 10. Dann kann der Schlägerkopf 11a bzw. der betreffende Schuh des Spielers 10 z.B. mit einem selbstklebenden, abziehbaren Folienstreifen hohen Reflexionsgrades versehen sein um die Detektionssicherheit zu erhöhen. Bei Verwendung eines Dopplerradargerätes als Detektor wird ersteres nicht wie dargestellt seitlich sondern in der rückwärtigen Verlängerung der beabsichtigten Richtung der Flugbahn des Golfballes aufgestellt.

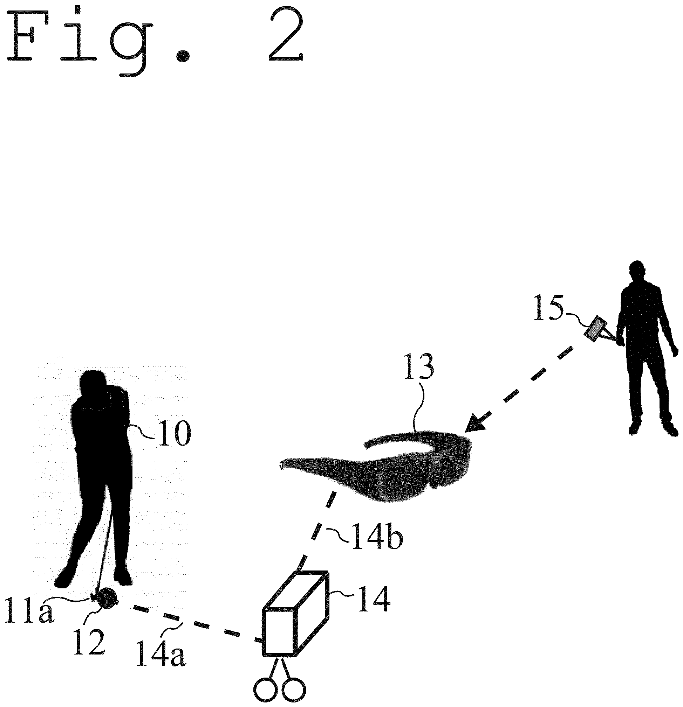

Figur 2 zeigt den Moment des Abschlages des Golfballes 12, d.h. das Auftreffen des Schlägerkopfes 11a auf den Golfball 12. Der Detektor 14 reagiert auf den entstehenden Schallimpuls und sendet ein Signal an die Shutterbrille 13, deren Empfangs- und Steuerschaltung daraufhin die Gläser 13a und 13b vorzugsweise gleitend in den angedeuteten Zustand niedriger Transparenz umschaltet, sodass der Spieler 10 die anschließende Flugbahn des Golfballes 12 nicht visuell verfolgen kann.

Im Hintergrund ist in Figur 2 die Gestalt eines Trainers skizziert, der über einen kleinen Handsender 15 zu einem von ihm gewählten Zeitpunkt ein Signal an die Shutterbrille 13 senden und damit alternativ zu dem Detektionsvorgang das Umschalten der Shutterbrille in den Zustand niedriger Transparenz auslösen kann. Statt dessen könnte der Detektor 14 ein auf den Handsender 15 abgestimmtes Empfangsmodul umfassen, das bei Empfang eines Signals von dem Handsender 15 den Sender des Detektors 14 aktiviert, der dann das Umschalten der Shutterbrille auslöst. Welche Auslösung Vorrang hat, kann in beiden Varianten über einen Schalter gewählt werden.

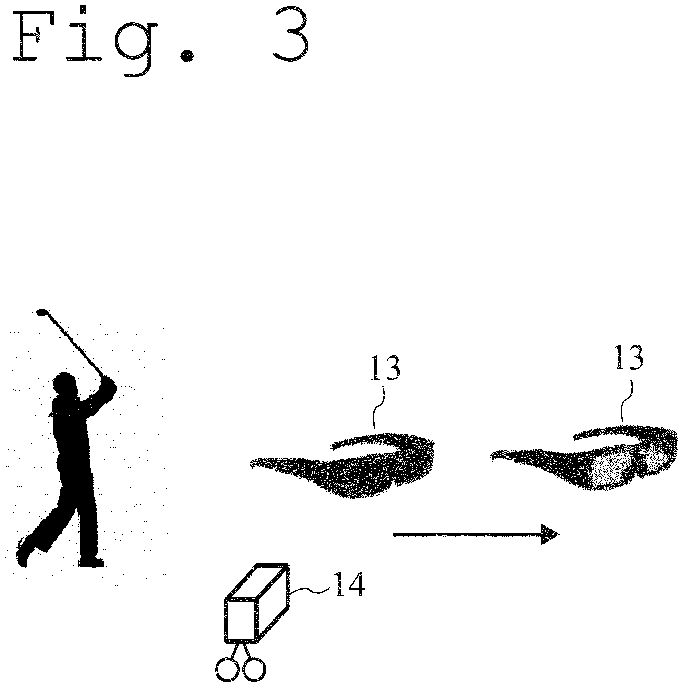

In Figur 3 ist der Abschlag mit dem Ausschwung des Schlägers 11 vollendet und die Shutterbrille 13 kehrt selbststätig mit einer vorgegebenen oder einstellbaren Verzögerungszeit in den rechts dargestellten Zustand hoher Transparenz zurück.

Figur 4 zeigt vereinfachte Blockschaltbilder der wesentlichen elektrischen Komponenten des Detektors 14 und der Shutterbrille 13.

Der Detektor 14 umfasst grundsätzlich einen Sensor S, z.B. ein Richtmikrofon, das im vorliegenden Beispiel entsprechend der gestrichelten Linie 14a auf den Golfball ausgerichtet ist. Auf den Sensor S folgt eine Verarbeitungsschaltung V, deren Ausgang mit einem Eingang eines Senders Tx verbunden ist. Der durch den in Figur 2 dargestellten Abschlag des Golfballes verursachte Schallimpuls bewirkt über S und V die Aktivierung des Senders Tx, der daraufhin über seinen Ausgang A ein Signal sendet, das durch die gestrichelte Linie 14b (vgl. Fig. 1 bis 3) symbolisiert ist. Der Sender Tx kann z.B. nach dem WI-FI-, RFID-, Bluetooth-oder dem DECT-Kommunikationsprotokoll arbeiten, sowie weiteren aus dem Stand der Technik bekannten Signalübertragungsarten. Die Verarbeitungsschaltung V umfasst eine schaltbare Verzögerungs-schaltung, die gewünschtenfalls den Sender Tx zeitverzögert gegenüber dem Eintreffen des Schallimpulses (bzw. dem Eintritt eines auf andere Weise detektierten Zustandes) aktiviert. Hierzu hat die Verzögerungsschaltung V zusätzliche Eingänge für Schalter S1, S2 für feste Verzögerungszeiten oder ein Potentiometer P zur kontinuierlichen Einstellung einer Verzögerungszeit. Auf diese Weise können die Trainingsbedingungen variiert werden. Optional hat der Sender Tx einen weiteren Eingang für den Ausgang eines Empfangsmoduls E, das auf das Signal des in Figur 3 dargestellten Handsenders 15 des Trainers anspricht.

Der oben im Zusammenhang mit Fig. 2 genannte Vorrangschalter ist nicht dargestellt.

Die Shutterbrille 13 umfasst eine Empfangsschaltung Rx, die über eine nachgeschaltete Transparenzsteuerschaltung TS die Transparenz der Gläser 13a, 13b in Abhängigkeit von dem angedeuteten Empfang eines Signals von dem Sender 14 (angedeutet durch die gestrichelte Linie 14b) oder dem Handsender 15 steuert, nämlich von hoher auf niedrige Transparenz schaltet und mit einer über einen Schalter S3 wählbaren oder einstellbaren Verzögerung zurück auf die hohe Transparenz schaltet.

Sowohl die Shutterbrille 13 als auch der Detektor 14 haben jeweils eine Stromquelle (z.B. Batterie oder Akku), einen Ein-/Ausschalter und mindestens eine Antenne. Diese Komponenten sind bekannt und deshalb nicht dargestellt.

## Patentansprüche

1. Anordnung zum Verbessern der Beherrschung eines Wurf-, Stoß-, Schlag- und/oder Schussgerätes und/oder des körperlichen Bewegungsablaufs, mit
einem Detektor (14), der einen Sender (Tx) umfasst und zu einem wählbaren Zeitpunkt zwischen dem Beginn einer Wurf-, Stoß-, Schlag- und/oder Schussbewegung und der Veränderung der Position eines Trainingsgerätes das Senden eines Signals auslöst, und
einer Shutterbrille (13) mit einer ihre Transparenz steuernden Empfangsschaltung (Rx), die beim Empfang des Signals des Senders (Tx) ein Umschalten von hoher Transparenz auf niedrige Transparenz steuert,
**dadurch gekennzeichnet, dass**
die Empfangsschaltung (Rx) die Shutterbrille (13) nach dem Umschalten von der hohen auf die niedrige Transparenz mit einer einstellbaren Verzögerung auf die hohe Transparenz zurückschaltet.

2. Anordnung nach Anspruch 1, **dadurch gekennzeichnet, dass** die Empfangsschaltung (Rx) mindestens das Umschalten der Shutterbrille (13) von der hohen auf die niedrige Transparenz gleitend steuert.

3. Anordnung nach einem der Ansprüche 1 bis 2, **dadurch gekennzeichnet, dass** die Gläser (13a, 13b) der Shutterbrille (13) UV-Filter umfassen.

4. Anordnung nach einem der Ansprüche 1 bis 3, **dadurch gekennzeichnet, dass** der Detektor (14) ein Bewegungsdetektor ist.

5. Anordnung nach Anspruch 4, **dadurch gekennzeichnet, dass** der Bewegungsdetektor eine Kamera ist, die den zeitlichen Ablauf der Bewegung bis zu einem ersten Teil der Flugphase des Balles durch digitale Bildverarbeitung mit einem gespeicherten Ablauf vergleicht und bei Eintritt einer voreingestellten Übereinstimmung das Senden des Signals auslöst.

6. Anordnung nach Anspruch 4, **dadurch gekennzeichnet, dass** der Bewegungsdetektor ein passiver optischer Detektor ist oder vorzugsweise der Bewegungsdetektor ein aktiver Detektor nach dem Lichtschrankenprinzip ist oder vorzugsweise der Bewegungsdetektor ein aktiver Detektor nach dem Radarprinzip, insbesondere ein Dopplerradargerät, ist oder vorzugsweise der Bewegungsdetektor ein Beschleunigungsdetektor ist, der Änderungen von Bewegungsgeschwindigkeiten und/oder Richtungen aufnimmt.

7. Anordnung nach einem der Ansprüche 1 bis 3, **dadurch gekennzeichnet, dass** der Detektor (14) ein akustischer Detektor ist, der auf den Schallimpuls beim Auftreffen der Schlagfläche (11a) eines Schlägers (11), des Fußes oder der Hand des Spielers auf den Ball anspricht und das Senden des Signals auslöst.

8. Anordnung nach dem Anspruch 4, **dadurch gekennzeichnet, dass** der Bewegungsdetektor ein Vibrationsdetektor ist, der mechanische Impulse aufnimmt.

9. Anordnung nach dem Anspruch 4, **dadurch gekennzeichnet, dass** der Bewegungsdetektor ein Drucksensor ist, der Veränderungen der auf Flächen wirkenden Kräfte aufnimmt, insbesondere bei kompletten Druckabfall und/oder -anstieg reagiert.

10. Anordnung nach dem Anspruch 4, , **dadurch gekennzeichnet, dass** der Bewegungsdetektor ein Verformungssensor ist, der Veränderungen von Elementen bei Expansion oder Kompression aufnimmt.

11. Anordnung nach einem der Ansprüche 1 bis 6, **dadurch gekennzeichnet, dass** das Senden des Signals durch den Sender (Tx) drahtlos (15) manuell auslösbar ist.

12. Verfahren zur Verbesserung der körperlichen Leistung mit einer Shutterbrille (13) und einem Detektor (14) unter Verwendung einer Anordnung nach einem der Ansprüche 1 bis 11, **dadurch gekennzeichnet, dass** der Detektor (14) einen Sender (Tx) beinhaltet, der drahtlos ein Signal an die Shutterbrille (13) sendet und diese folglich ihre Transparenz verändert, vorzugsweise einmalig verändert.

13. Verwendung einer Anordnung nach einem der Ansprüche 1 bis 11 und einer zu einem einmaligen Zeitpunkt die Transparenz ändernden Shutterbrille (13) und eines Detektors (14) zur Steigerung der körperlichen Leistung, welche den Bewegungsablauf und/oder diesen in Verbindung mit der Benutzung von Sportgeräten zum
a) Werfen
b) Stoßen
c) Schlagen
d) Schießen
sowie deren mögliche Kombination umfassen.

## Claims

1. Assembly for improving the control over a device for throwing, kicking, hitting and/or shooting and/or over the physical motion sequence, having
- a detector (14), which comprises a transmitter (Tx) and triggers, at a selectable time between the beginning of a throwing, kicking, hitting and/or shooting movement and the change in position of a training device, the transmission of a signal, and
- shutter glasses (13) having a receiving circuit (Rx), which controls the transparency thereof and controls a switch from high transparency to low transparency when the signal from the transmitter (Tx) is received, **characterized in that**,
after the switching from the high to the low transparency, the receiving circuit (Rx) switches the shutter glasses (13) back to high transparency with a settable delay.

2. Assembly according to Claim 1, **characterized in that** the receiving circuit (Rx) controls at least the switching of the shutter glasses (13) from high transparency to low transparency in a continuous manner.

3. Assembly according to either of Claims 1 and 2, **characterized in that** the lenses (13a, 13b) of the shutter glasses (13) comprise UV filters.

4. Assembly according to one of Claims 1 to 3, **characterized in that** the detector (14) is a motion detector.

5. Assembly according to Claim 4, **characterized in that** the motion detector is a camera, which compares the sequence of the movement over time up to a first portion of the flight phase of the ball to a stored sequence by way of digital image processing and triggers the transmission of the signal if or when a preset match occurs.

6. Assembly according to Claim 4, **characterized in that** the motion detector is a passive optical detector or preferably the motion detector is an active detector in accordance with the light barrier principle or preferably the motion detector is an active detector in accordance with the radar principle, in particular a Doppler radar unit, or preferably the motion detector is an acceleration detector, which records changes in movement speeds and/or directions.

7. Assembly according to any of Claims 1 to 3, **characterized in that** the detector (14) is an acoustic detector which reacts to the sound pulse when the striking surface (11a) of a striking implement (11), the foot or the hand of the player hits the ball and triggers the transmission of the signal.

8. Assembly according to Claim 4, **characterized in that** the motion detector is a vibration detector, which records mechanical pulses.

9. Assembly according to Claim 4, **characterized in that** the motion detector is a pressure sensor, which records changes in the forces acting on surfaces, in particular reacts in the case of a complete pressure drop and/or increase.

10. Assembly according to Claim 4, **characterized in that** the motion detector is a deformation sensor, which records changes in elements in the case of expansion or compression.

11. Assembly according to any of Claims 1 to 6, **characterized in that** the transmission of the signal is able to be triggered manually wirelessly (15) by the transmitter (Tx).

12. Method for improving the physical performance using shutter glasses (13) and a detector (14) by way of using an assembly according to any of Claims 1 to 11, **characterized in that** the detector (14) includes a transmitter (Tx), which wirelessly transmits a signal to the shutter glasses (13), and the latter changes its transparency as a consequence, preferably once.

13. Use of an assembly according to any of Claims 1 to 11 and shutter glasses (13) which change transparency at a single time and a detector (14) for enhancing the physical performance, which comprise the motion sequence and/or the motion sequence in connection with the use of sports equipment for
a) throwing
b) kicking
c) hitting
d) shooting
and the possible combination thereof.

## Revendications

1. Ensemble destiné à améliorer la maîtrise d'un appareil de lancer, de poussée, de frappe et/ou de tir et/ou la séquence de mouvements physiques, ledit ensemble comprenant
un détecteur (14) qui comprend un émetteur (Tx) et qui déclenche l'émission d'un signal à un instant sélectionnable entre le début d'un mouvement de lancer, de poussée, de frappe et/ou de tir et le changement de position d'un appareil d'entraînement, et
des lunettes à obturation (13) pourvues d'un circuit de réception (Rx) qui commande la transparence de celles-ci et qui commande le passage d'une transparence élevée à une transparence faible lors de la réception du signal de l'émetteur (Tx),
**caractérisé en ce que**
le circuit de réception (Rx) remet les lunettes à obturation (13) en transparence élevée après passage de transparence élevée à la transparence faible avec un retard réglable.

2. Ensemble selon la revendication 1, **caractérisé en ce que** le circuit de réception (Rx) commande de manière variable au moins le passage des lunettes à obturation (13) de la transparence élevée à la transparence faible.

3. Ensemble selon l'une des revendications 1 et 2, **caractérisé en ce que** les verres (13a, 13b) des lunettes à obturation (13) comprennent des filtres UV.

4. Ensemble selon l'une des revendications 1 à 3, **caractérisé en ce que** le détecteur (14) est un détecteur de mouvement.

5. Ensemble selon la revendication 4, **caractérisé en ce que** le détecteur de mouvement est une caméra qui compare la séquence temporelle du mouvement jusqu'à une première partie de la phase de vol de la balle à une séquence mémorisée à l'aide d'un traitement d'image numérique et déclenche l'émission du signal lorsqu'une correspondance prédéfinie se produit.

6. Ensemble selon la revendication 4, **caractérisé en ce que** le détecteur de mouvement est un détecteur optique passif ou de préférence le détecteur de mouvement est un détecteur actif selon le principe de la barrière lumineuse ou de préférence le détecteur de mouvement est un détecteur actif selon le principe du radar, notamment un appareil radar Doppler ou de préférence le détecteur de mouvement est un détecteur d'accélération qui enregistre les variations de vitesse de mouvement et/ou de direction.

7. Ensemble selon l'une des revendications 1 à 3, **caractérisé en ce que** le détecteur (14) est un détecteur acoustique qui répond à l'impulsion sonore lorsque la surface de frappe (11a) d'une raquette (11), le pied ou la main du joueur vient frapper la balle et déclenche l'émission du signal.

8. Ensemble selon la revendication 4, **caractérisé en ce que** le détecteur de mouvement est un détecteur de vibrations qui reçoit des impulsions mécaniques.

9. Ensemble selon la revendication 4, **caractérisé en ce que** le détecteur de mouvement est un capteur de pression qui absorbe les variations des forces agissant sur des surfaces, notamment en cas de chute et/ou d'augmentation complète de la pression.

10. Ensemble selon la revendication 4, **caractérisé en ce que** le détecteur de mouvement est un capteur de déformation qui capte les variations d'éléments lors de la détente ou de la compression.

11. Ensemble selon l'une des revendications 1 à 6, **caractérisé en ce que** l'émission du signal par l'émetteur (Tx) peut être déclenchée manuellement sans fil (15).

12. Procédé d'amélioration des performances physiques à l'aide de lunettes à obturation (13) et d'un détecteur (14) utilisant un ensemble selon l'une des revendications 1 à 11, **caractérisé en ce que** le détecteur (14) comprend un émetteur (Tx) qui émet sans fil un signal vers les lunettes à obturation (13) et qui modifie en conséquence la transparence de celles-ci, de préférence une seule fois.

13. Utilisation d'un ensemble selon l'une des revendications 1 à 11 et de lunettes à obturation (13), dont la transparence varie à un instant unique, et d'un détecteur (14) pour augmenter les performances physiques qui comprennent la séquence de mouvement et/ou celle-ci en liaison avec l'utilisation d'appareils de sport pour
a) lancer
b) pousser
c) frapper
d) tirer
et leur éventuelle combinaison.
